# EUROPEAN PATENT SPECIFICATION

(11) **EP 2 692 236 B1**
(45) Date of publication and mention of the grant of the patent: **28.01.2015**
(21) Application number: 13175683.5
(22) Date of filing: 09.07.2013
(51) Int. Cl.: A22C 15/00

(54) **An apparatus for hanging on support rods**
Vorrichtung zum Aufhängen von Tragestangen
Appareil pour suspendre sur des tiges de support

(30) Priority: 03.08.2012 IT RE20120052
(43) Date of publication of application: 05.02.2014
(73) Proprietor: Fava s.n.c. di Adele Turetta & c., 43126 Parma (IT)
(72) Inventor: Fava, Antonio, 43100 Parma (IT)
(74) Representative: Corradini, Corrado

(56) References cited:
- EP-A1- 2 008 522
- WO-A1-92/03929
- US-A1- 2011 275 296

## Description

The present invention relates to operations for hanging products, provided with a hanging string, on free support rods, i.e. which are not stably constrained to other organs.

A typical application is for arranging meat products (salami, collars, hams or other sacked meat products) on suspended conveyors or frames, of a product treatment plant.

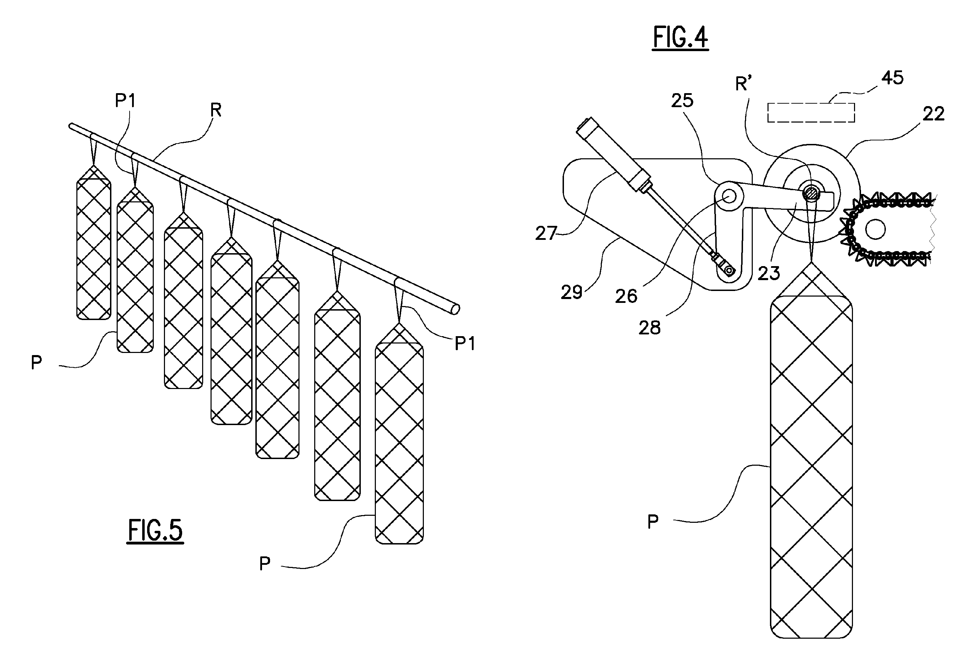

To this end the products are provided with a string (or an equivalent means) with which they are hung on a free support rod (often known as a stick); an example of this is illustrated in figure 5.

The frames or suspended conveyors bearing the bars with the salamis hung thereto are then sent to a subsequent treatment (for example seasoning, smoking or others besides).

Apparatus, illustrated in documents WO 92/03929 A1 and US 2011/275296 A1, are known for hanging products, such as sacked meat) provided with a hanging string, on free support rods, comprising:
a supply line of the products, provided with first support means, able to support the products hung by the hanging strings;
a loading station of the products onto the support rods having constraint means able to support a support rod at a time in a fixed position, with at least a free end;
a transfer device, able to transfer the products, one at a time in succession, from the supply line to the support rod supported in the loading station.

The transfer device comprises a plurality of complex engaging mechanisms transported in continuous motion and a constant direction by a continuous chain transporter which moves along a closed-loop pathway. In the loading station zone of the apparatus, the support rod is arranged parallel to the advancing direction of a main branch of the continuous conveyor, and the products advance on this line with the eyelet of the string kept in an open configuration, which supply line develops on a plane that is perpendicular to the advancing direction of the line; the products pass directly from the supply line to the support rod, exploiting the motion of the line and the geometrical arrangement of the eyelet. Each engaging mechanism comprises at least two hooks which are kept distant from one another in order to maintain the product string open so that it slides along the support rod, and once it has reached the predetermined point the mechanism rotates the hooks thereof so as to release the product in the desired point along the longitudinal axis of the rod.

A drawback connected with these apparatus is the structural complexity of the transfer device; this comprises a relatively high number of hooking mechanisms, each of which comprises two hooks able to distance from one another to keep the product string opened, while it moves along the support rod, and able to oscillate so as to unload the string and release it on the support rod; and lastly able to near one another during the product hooking step; these mechanisms are thus small and relatively complex machines, having a relative very expensive construction and equally complex maintenance, by virtue of the relatively high number of the hooking mechanisms.

A further drawback connected with the transfer device is the relatively inaccurate and not very reliable functioning thereof in relation to the precision of the depositing of the products along the axis of the support rod. In fact, because of the complexity and weight thereof, the chain conveyor of the transfer device in practice requires an uninterrupted motion; consequently the products must be released onto the support rod while advancing. This leads, as a further consequence, to imprecision in the release operation of the product. In fact, the precision of this operation depends not only on the geometric point in which the release movement of the hooking mechanism is commanded, but also on the time the string uses to detach from the mechanism, as well as the mass and the advancement velocity (and therefore the inertia) of the transported product; it is sufficient to consider, for example, that on varying the friction between the string and hooks of the hooking mechanism there is also a variation in the time the string needs to detach from the hooking mechanism; therefore the longitudinal position in which the product is released on the support rod varies.

A further drawback is the relatively large space required by the continuous conveyor of the transfer device, which by its nature requires a looped pathway and connections between the two branches of the pathway which in practice cannot have an excessively small degree of curvature.

An aim of the present invention is to realise an apparatus in which the transfer device is able to obviate the drawbacks.

These and other aims are attained by the present invention as it is characterised in the claims.

In the invention, the transfer device comprises only one organ, defined by a mobile shuttle, which transfers all the products one at a time and releases them regularly distributed on the support rod; the manufacturing cost of this shuttle is obviously much lower than the manufacturing cost of a relatively numerous plurality of hooking mechanisms, as in the prior art. The maintenance of the shuttle is also decidedly lower.

Further, the movement of the shuttle is intermittent, with an outward run and a return run on the same pathway (both with a varying length); therefore it is possible to release the product on the support rod while the product is in a stationary condition, with the consequence that the geometric precision with which the product is hanging on the rod is very much higher than in the prior art, and it is also more reliable, as it substantially does not depend on the weight of the product, nor on the velocity the product advances at, nor on friction with the support means.

Further, the transfer device comprises a single shuttle which moves along a straight track; the size of the device is therefore relatively very small with respect to the prior art.

The invention is described in detail in the following, with the aid of the accompanying figures of the drawings, which illustrate an embodiment thereof by way of non-exclusive example.
Figure 1 is a plan view of the apparatus for hanging products.
Figure 2 is a vertical elevation in the direction of the arrow II of figure 1.
Figure 2A is a first detail in larger scale of figure 2.
Figure 2B is a second detail in larger scale of figure 2.
Figure 3A is a detail in larger scale of figure 2A.
Figure 3B is a section along plane IIIB-IIIB of figure 2B.
Figure 3C is a section along plane IIIC-IIIC of figure 2A.
Figure 4 is a section along plane IV-IV of figure 2.
Figure 5 shows products provided with a string hung from a free support rod (stick).
Figure 6 shows a second embodiment of the detail of figures 2B and 3B.
Figure 7 is a larger-scale detail of figure 1, which shows an alternative embodiment of the intermediate device for actuating the transfer of the hooking string P1 from the first support means 11 to the second support means 42.

The device operates with products P having a hanging string P1, by which the products are hung, grouped in a predetermined number, with a pitch and position that can be adjustable, on a free supporting rod, i.e. with ends not stably constrained and destined, after the loading operation of the products P, to be transferred onto suspended conveyors, carriage frames, and then to be passed on to a subsequent treatment step, for example, curing, smoking, or other steps besides.

Figure 5 illustrates a support rod R on which a group of products P is hung. The string P1 is normally in the form of a closed loop and is usually obtained with a flexible limp string constrained at two ends thereof to an end of the product P; alternatively the string can be rigid, i.e. not deformable under the weight of the product, and might also have an open end, such as a hook, having only one end constrained to the product P.

The apparatus comprises a supply line 10 of the products, provided with first support means 11, destined to support the products P hung on the first support means 11 by means of the hanging strings P1.

The first support means 11 are shaped so as to keep the eyelet of the hanging string open, such that the loop can receive the section of a rod R with a sufficient amount of play.

In a preferred but not exclusive embodiment, the supply line 1 comprises a usual chain conveyor 12 actuated in longitudinal motion, wound in a closed loop about two end wheels 13 and 13', which moves along a path coinciding with the longitudinal development thereof. The first supporting means 11 are fixed to the chain conveyor 12, and are distributed evenly at a predetermined mutual distance, along the entire extension of the chain conveyor.

The chain conveyor 12 is guided by a straight track 14 along a straight section of the line 10, which track 14 is substantially, but not necessarily, horizontal.

The apparatus further comprises a loading station 20 of the products P onto the support rods R, the loading station 20 having fastening means able to support, in a fixed horizontal position, a support rod R' having a free end; more precisely the rod R' is arranged with the free end (proximal end Ra) located nearest to the supply line 10.

In a preferred, but not exclusive, implementation, in the loading station 20, the support rod R' is arranged horizontally and substantially perpendicular to the supply direction of the supply line 10.

The constraint means located in the loading station comprise a gripping means 22 (e.g. having a chuck) which can jointingly constrain an end of the support rod R', more precisely the end of the rod further from the supply line 10.

Further, the constraint means comprise at least two supporting arms 23, 24 capable of supportingly bearing the support rod R', which are arranged at a distance from one another and from the gripping means 22.

In more detail, during the loading of the product onto the rod R', the two arms 23 and 24 are initially placed in the inactive position where they are not an obstacle to the passage of the strings P1 around the rod R' during the insertion and sliding thereof; then, after a certain number of products have been hung on the rod R', the first arm 23 is placed in the active position, where it acts as a support for the rod R', so that the section of rod between the distal end Rb end of the rod and the position of the first arm 23 is full of products P hanging from the rod; subsequently, after another plurality of products has been hung from the rod R', the second arm 24 is also placed in the active position, where it acts as a support for the rod R', so that the section of rod between the position of the first arm 23 and the position of the second arm 24 is also filled with products P hanging from the rod. Lastly the remaining stretch of rod, between the arm 24 and the proximal end Ra of the rod R' is also loaded with hung products P.

In a preferred, but not exclusive, embodiment, illustrated in the figures, the two support arms 23, 24 are both fixed projectingly from a a respective bushing 25, rotatably supported by a common shaft 26, parallel to the rod R' to be supported. Each arm 23, 24 projects from the bushing 25 and by rotating in a first direction (anticlockwise in figure 4) brings its free end below and in abutment with the rod R', such as to support it. By being rotated in the other direction (clockwise in figure 4), the arm 23, 24 moves into an inactive position, sufficiently distanced from the rod R' as not to hinder the passage of the strings P1.

The arm 23, 24 is rotated by means of a respective jack 27, which actuates a lever 28 fixed to the bushing 25; a respective frame 29 supported by the shaft 26 supports each jack 27.

The apparatus comprises a transfer device 40, which operates with reciprocating motion and is able to transfer the products P one at a time in succession from the supply line 10 to the support rod R' supported in the loading station 20.

The transfer device 40 comprises a straight sliding track 45 arranged parallel to the support rod R' which sliding track 45 is supported in the loading station, in particular arranged above and at a short distance from the rod R'. The device 40 further comprises an organ 41 that is mobile back and forth along the track 45, in a run that starts from the supply line 10 and terminates at any point, variable from run to run, of the support rod R' and vice versa. The shuttle 41 bears a second support means 42 shaped such as to receive and support the eyelet of the hook P1 in arrival from the first support means 11 and to keep the eyelet of the string P1 open, so that the string can be inserted around the support rod R' following the axial displacement of the shuttle 41 with respect to the rod R'.

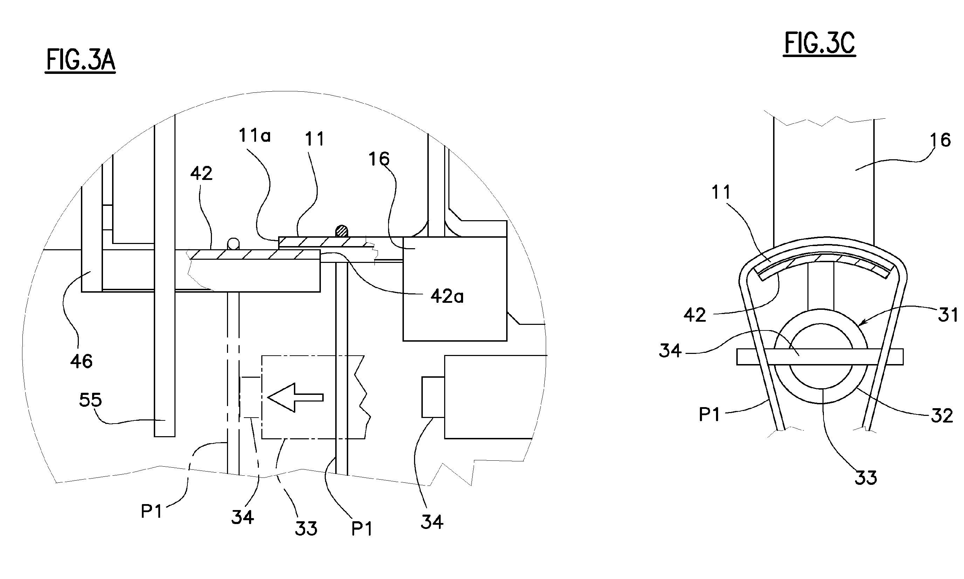

In greater detail, in a preferred but not exclusive embodiment, the first supporting means 11 are formed as a flat arched wall, so as to form a cylindrical wall portion, having horizontal directrices and an arched cross section with a concavity facing downwards (see figure 3C); this shape is such as to keep the eyelet of the string P1 looped around the means open, so that it can receive, with sufficient play, the section of a rod R; in detail, each support means 11 is projectingly fixed, with a horizontal directrix, to a bracket 16, solidly constrained to the chain conveyor 12.

The apparatus comprises an intermediate device, operating at the loading station 20, able to actuate transfer of the hooking string P1 from the first support means 11 to the second support means 42.

In the embodiment shown in the figures, the first support means 11 are fixed to the chain conveyor 12 in such a way that the eyelet of the hanging string P1 kept open by the first support means 11 develops on a vertical plane, parallel to the direction of the supply line.

The second support means 42 have shape and dimensions that are substantially identical to those of the first support means 11, and are projectingly fixed, with a horizontal directrix, to a bracket 46 fixed to the lower surface of the shuttle 41.

The support means 42 are in a geometrical relationship with the first support means 11 such that, when the shuttle 41 moves into the loading station in the station 20, close to the supply line 10, and near a support means 11, the free front end 42a thereof is arranged below and at a short distance from the free front end 11a of the first support means 11 (see figure 3A and figure 3C).

In a preferred, but not exclusive, implementation, the intermediate device, for actuating the transfer of the hooking string P1 from the first support means 11 to the second support means 42 comprises a first pusher means 31 is provided, operating at the loading station 20, which is able to implement the displacement of the hanging string P1 from the first support means 11 to the second support means 42, when the second support means 42 are in the configuration in which the first means 11 is superimposed on the second means 42 (as shown in figures 3A and 3C).

In the embodiment shown in the figures, the first thrusting means 31 comprise a jack 32, fixed to the track 14, in a fixed position in the loading station 20, behind the first support means 11 which is in the station 20; the piston 33 is orientated with its axis parallel to the directrices of the first support means 11.

An abutment body 34 is located at the free end of the piston 33 of the jack, which abutment body 34 is located below the two support means 11 and 42 and is able to impact the string P1 looped to the support means 11 and 42; the transversal body 34, pushed by the action of the jack 32, pushes the string P1 and transfers it from resting on the support means 11 to resting on the support means 42 (see figure 3C).

The support means 42 is positioned vertically above the rod R' at a relatively short distance therefrom and, during the movement of the organ 41 along the track 45, moves parallel to the axis of the rod R' in such a way that the string P1 hanging therefrom runs about the the section of the support rod R' fixed in the loading station; in particular, it is arranged with its generatrices horizontal and parallel to the axis of the support rod R'.

Further, a second thrusting means 52 is provided, associated to the shuttle, able to implement the displacement of the string from the second support means 42 to the support rod.

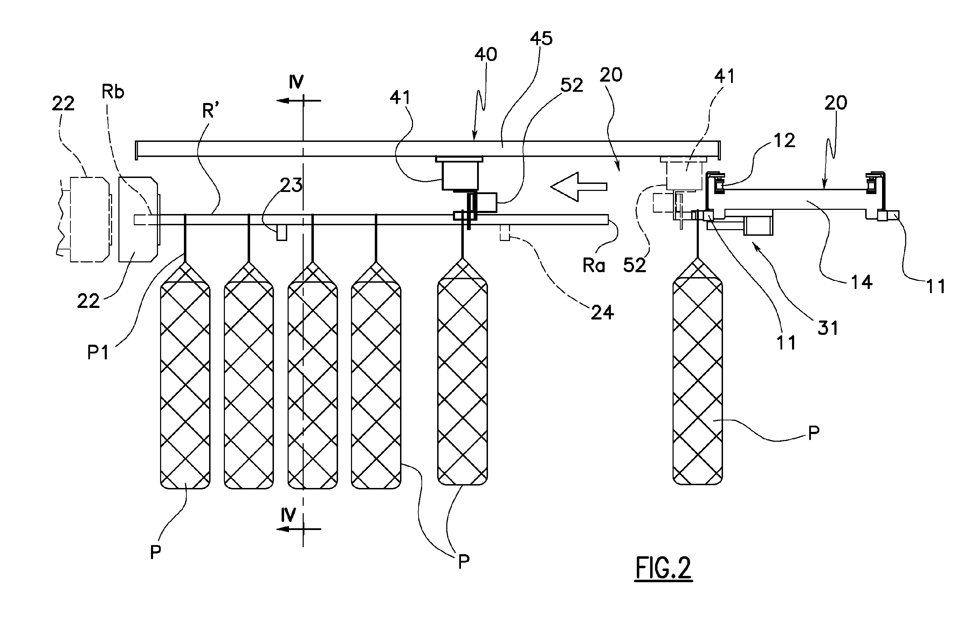

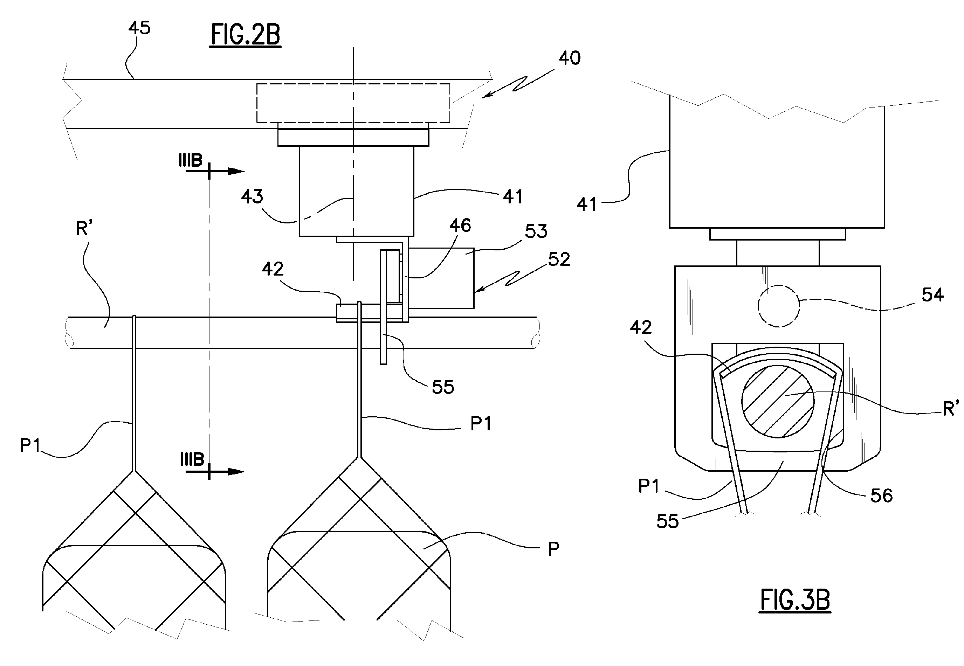

In to the embodiment illustrated in figures 2B and 3B, the second pusher means 52 comprises a jack 53, fixed to the bracket 46 below the shuttle 41, which at the free end of the piston 54 thereof bears a transversal abutment body 55 located beneath the support means 42 and possibly also below the section of the rod R', which can impact against the string P1 hung from the support means 42; the transversal body 55, pushed by the action of the jack 53, pushes the string P1 so as to transfer it from its rest on the means 42 onto the support rod R' (see figures 2B and 3B). Naturally, the abutment body 55 is shaped so as to slide longitudinally along the rod R' without coming into contact with the rod R'; in particular the abutment body 55 has a wide opening 56 through which the section of the rod R' passes with ample play.

In the embodiment shown in the figures, the shuttle 41 is slidably constrained to the track 45 and is provided with motorized means (of usual type and illustrated only schematically in the figures), by means of which it is commanded to slide back and forth along the track 45.

Further, the shuttle 41 comprises means for rotating the second support means 42 together with the second pusher means 52, about a vertical axis 43, such as to vary the orientation thereof in the horizontal plane; the rotation means are of usual type and are not illustrated in detail in the figures.

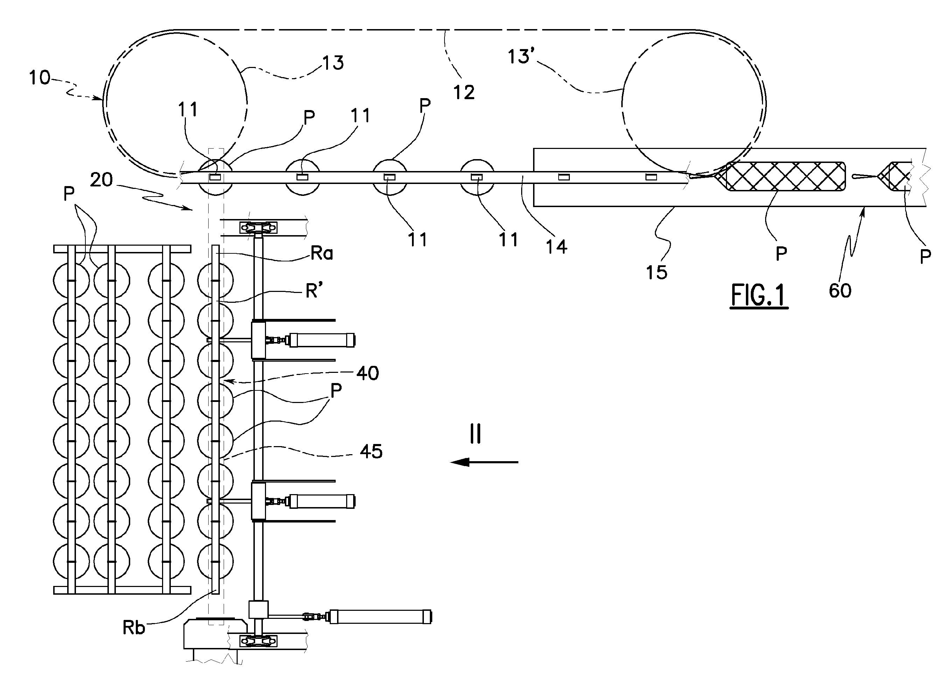

In operation, in the embodiment of the apparatus illustrated in figures 1-5, the method is actuated in order to hang products P having a hanging string P1 for engaging to free support rods R.

In the initial part of the method, the products P are hung to the first support means 11 while the first support means 11 are located in an area of the line 10 located upstream of the loading station 20. For example an initial supply conveyor 60 is provided, which advances products P, loose and arranged horizontally, which are then hung on the supply line 10 with the strings P1 hung to the first support means 11.

Advancing with continual or step-motion, the line 10 brings the products P one at a time in succession into the loading station 20. Normally the advancement velocity is 4-10 products P per minute.

From here, by means of the transfer device 40, a cycle of transferring a single product P at a time from the supply line 10 rod R' is performed.

In this cycle, first the transfer of the hanging string from the first support means 11 to the second support means 42 is carried out.

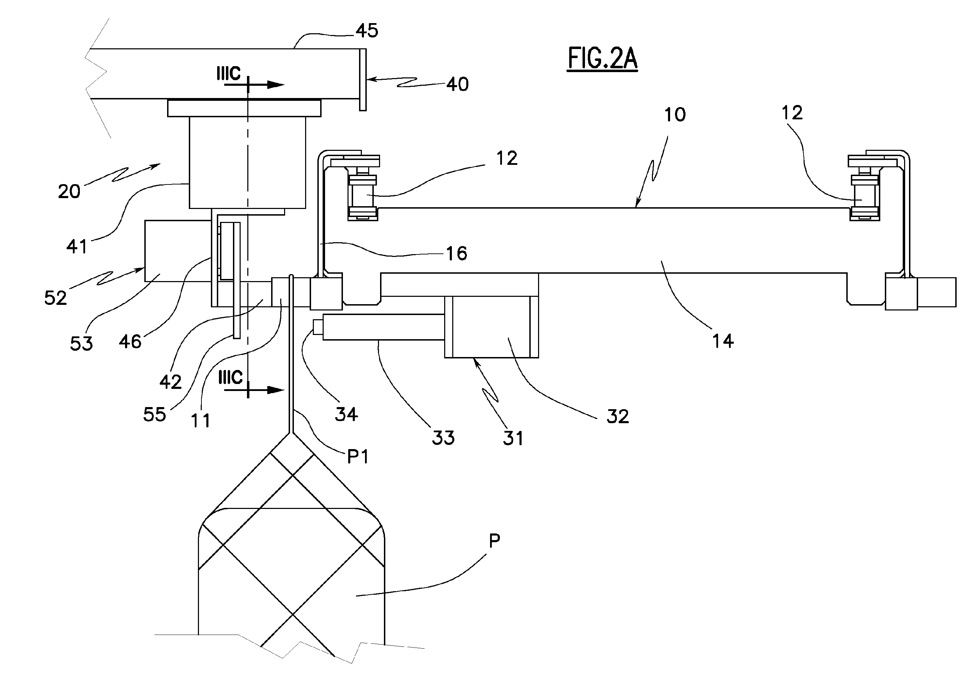

This operation is performed by sliding the shuttle 41 along the track 45 so that in each transfer cycle it carries out:
a forward run in which it moves in the direction going from the proximal end Ra toward the distal end Rb up to the point where the rod releases the product, and
a return run in which the shuttle 41 moves in the direction going from the distal end Rb toward the proximal end Ra until it reaches the end of the track, in proximity of the supply line 10. On reaching this position, as soon as the transversal abutment body 55 is removed from the rod R', the shuttle 41 first rotates the second support means 42 together with the second pusher means 52, about the vertical axis 43, such as to arrange the means 42 in a first orientation, in which it is arranged substantially coaxially with the first support means 11 (positioned in the loading station 20) and the free end 42a is facing towards the free end 11a of the means 11, and the abutment body 55 is positioned relatively distant from the end 42a (as shown in figures 2A and 3A).

After the rotation, the shuttle 41 is placed in the loading configuration in the station 20, in which the free end 42a is arranged beneath and at a short distance from the free front end 11a of the first support means 11 (see figures 3A and 3C). Here, the first pusher means 31 becomes active and by means of the transversal abutment body 34 thereof pushes on the sting P1, transferring it from the first means to the second means 42.

After that, the shuttle 41 distances from the loading station and initiates a return run along the track 45, which is parallel to the rod R', while the line 11 brings a next support means 11 into the loading position in the station 20. Before initiating the return run along the track 45, the shuttle 41 first causes a rotation of the second support means 42 together with the second pusher means 52, about the vertical axis 43, so as to arrange the means 42 in a second orientation, in which it is arranged substantially parallel to the rod R'(i.e. with the eyelet of the string P1 substantially perpendicular to the rod R') and the free end 42a is facing forward in the direction of the advancing movement and the abutment body 55 is located behind the string P1 (as shown in figure 2B). This rotation is necessary in order to arrange the abutment body 55 upstream of the string P1 released on the rod R and thus avoid its interfering with the string in the return run.

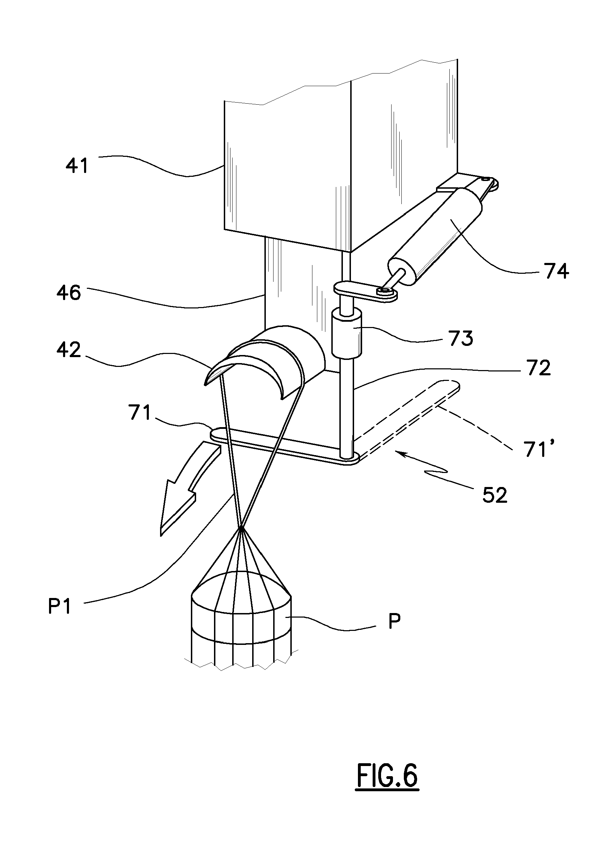

Figure 6 illustrates a second embodiment of the second pusher means 52, an alternative to the embodiment illustrated in figures 2B and 3B, which includes a horizontal arm 71, fixed to a rotating vertical pin 72 supported by a bushing 73 that is fixed in relation to the support means 42. The pin 72 is positioned laterally of the support means 42, and its rotation is such that, by rotating in one direction, the arm 71 interferes with the string P1 coupled to the means 42 and pushes it out from the support on the vehicle 42; by rotating instead in the opposite direction, the arm 71 is brought into the inactive position 71', in which is arranged parallel to the track 45 and does not interfere with the strings P1 positioned on the support rod R during the loading step in the loading station 20. The rotation of the arm 71 is obtained, for example by means of a small cylinder 74 supported by the shuttle 41, which actuates a lever applied to the pin 72.

The second embodiment of the second pusher means 52, does not require the rotation of the second support means 42 with respect to the shuttle 41, because after the arm 71 has moved the string P1 from the second support means 42 to the support rod, the arm 71 is moved into the inactive position 71', in which it does not interfere with the strings P1 located on the rod R as it is positioned at the flank and distanced from the strings P1.

Therefore, the second support means conveniently maintains a fixed orientation, i.e. the orientation corresponding to the "first orientation" (see figure 2A), in which the free end 42a is facing towards the free end 11a of the support means 11.

In the apparatus according to the first embodiment illustrated in figures from 1 to 6, the supply line 10 moves with step motion so that the positioning of the shuttle 41 for the loading in relation with the first support means 11 takes place while it is stationary in the loading station.

In a second embodiment of the apparatus, the supply line 10 can advance with a continuous motion also during the step of transferring the string P1 from the first means 11 to the second means 42. In this case, the eyelets of the first means 11 of the line 10 are arranged on vertical planes perpendicular to the advancement direction of the line; this is different to what is illustrated in the figures; further, second means 42 borne by the shuttle 41 move into the loading station before the first means 11, orientated towards the second means 42, i.e. with the lines orientated parallel to the line 10; as soon as the first means 11, when advancing, is superposed on the second half 42, the first pusher means is activated 31, which pushes the string P1 forwards and transfers it from the first means 11 to the second means 42.

Immediately thereafter, the shuttle 41 moves away from the line 10 and, before beginning the return run along the track 45, the second means 42 are orientated in the second position, with a rotation around the vertical axis 43, so as to arrange the means 42 substantially parallel to the rod R' and the free end 42a facing forwards (as shown in figure 2B).

Subsequently, the thus-orientated second means 42 is penetrated by the rod R' and is slid there-along up until the string P1 reaches the point at which the product resting on the rod R' will be released.

The releasing of the product on the rod R' is done by activating the second thrusting means 31 which, with the transversal abutment body 55, pushes the string P1, transferring it from the second means 42 to the rod R'.

After this, the shuttle 41 is ready to perform a successive cycle of transferring a single product P at a time from the supply line 10 to the rod R'.

In a third embodiment, alternative to the preceding ones, again in a case in which the supply line 10 moves continuously, an intermediate device 36 can be provided for actuating transfer of the hooking string P1 from the first support means 11 to the second support means 42, comprising an intermittently rotating organ with a step-rotation (by 90 degrees) about a vertical axis operating at the loading station 20.

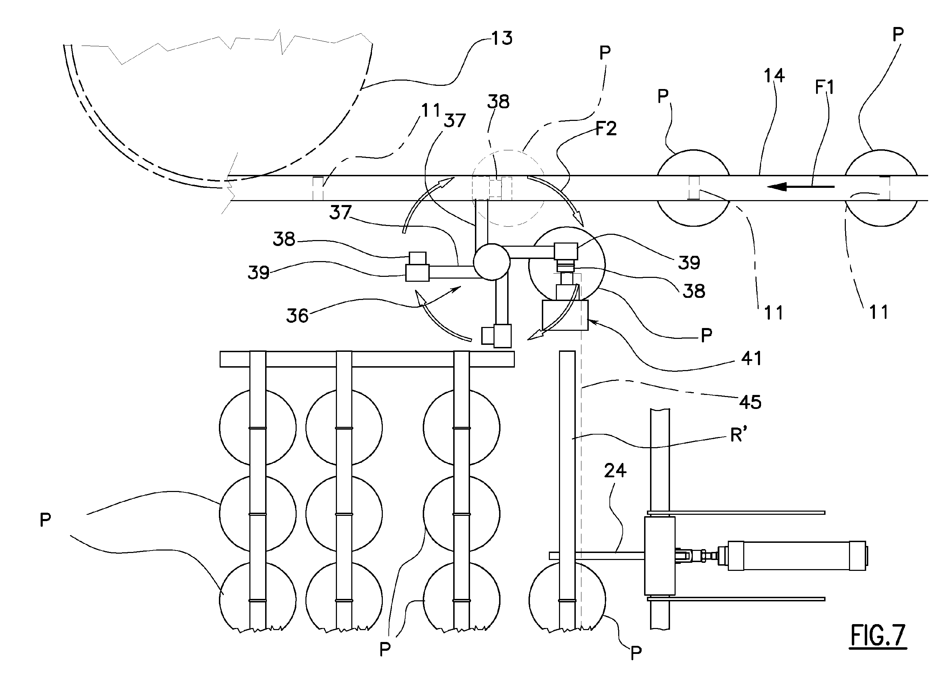

Figure 7 schematically illustrates the intermediate device 36 which has a plurality of (in particular four) arms 37 positioned in star-fashion. Support means 38 are located at the ends the arms 37, having a same shape as the above-illustrated means 11 and 42, each of which receives a string P1 of a product borne by a first means 11 which advances with a continuous motion borne by the line 10. In this case too, the eyelets of the strings P1 hung to the first means 11 of the line 10 are arranged on vertical planes that are perpendicular to the advancement direction of the line.

During functioning, at the start of the transfer cycle of each product P, one of the support means 38 is arranged coaxially to the line 10; when a product P hung to a support means 11 nears (with continuous motion) borne by the line 10, the device 36 performs a step-rotation by 90 degrees (arrow F2) with a direction that initially is opposite the advancement direction (arrow F1) of the line 10. With this rotation, the support means 38 insert first in the eyelet of the string P1 hunge to the support 11 which nears and takes it from the support P1 (which continues in the motion thereof); then the support means 38 move, at the end of the 90-degree rotation, to the proximal end of the track 45 where they become arranged coaxially to the support means 42 of the mobile shuttle 41 located in the loading position (with the axis thereof perpendicular to the advancement direction (F1) of the supply line 10. Here, using a pusher means 39, for example associated to a respective support 38, the string P1 is transferred onto the support means 42 and the shuttle 41 transfers the product P on the rod R', operating in the above-described ways for the first embodiment of the apparatus.

The star device 36 now described, exhibits various advantages; in particular it makes the string device P1 more reliable with respect to the shuttle 41, during the passage step from the device 36 to the shuttle 41.

It further mostly independently makes the movement and functioning of the transfer device 40 from the supply means 10, 60 located upstream thereof, thus enabling a more reliable and rational function of both.

In the functioning of all the embodiments of the apparatus, the position in which the product P is released on the rod R' varies along the length of the rod: the first product P is arranged relatively close to the distal end Rb of the rod R' and the following products P are arranged gradually closer to the proximal end Ra.

As already described above, in the first part of a load cycle, the rod R' is supported only by the gripping means 22 which constrain the distal end Rb in a joint. In this step, both arms 23 and 24 are maintained in the inactive position, where they are not a hindrance to the passage of the products P which slide along the rod R'.

Subsequently, after a predetermined number of products P (two in the case illustrated in the figures) have been loaded on the rod R', the first arm 23 is brought into the active position so as to support the rod R' and the products suspended therefrom; the products are then placed resting upstream of the arm 23 (see figure 2).

Subsequently, after another predetermined number of products P (four in the case shown in the figures) has been loaded on the rod R', the second arm 24 is also brought into the active position, so as to support the rod R' and products supported thereby.

Finally the loading of the products P on the rod R' is completed.

Following the above, the fully-loaded rod R' is freed from the gripping means 22 and transferred to a subsequent process step, and a new free rod R is placed in the loading station 20 and constrained in the position of the previous rod R', ready to be loaded with products P.

The rod R' loaded with products is deposited on a pair of chain conveyors, possibly with reference elements, suitably distanced; the lowering of the arms 23, 24 causes the transfer onto the chain conveyors. The chain conveyors advance by a step, so that they are predisposed to receive the next rod loaded with products, and to realize a successive order of loaded rods that will be transferred, together, onto the frames or scales which will in turn be transferred to other locations so that they can be subjected to various treatments: drying, seasoning, smoking or others besides.

Obviously numerous modifications of a practical-applicational nature can be made to the present invention, without its thereby forsaking the scope of the inventive idea as claimed below.

## Claims

1. An apparatus for hanging products, provided with a hanging string, on support rods,
comprising:
a supply line (10) of the products (P), provided with first support means (11), able to support the products (P) hung by the hanging strings (P1), the first support means (11) being conformed such as to maintain an eyelet of the hanging string (P1) open;
a loading station (20) of the products (P) onto the support rods having constraint means (22, 23, 24) able to support a support rod (R') at a time in a fixed position;
a transfer device (40), operating with a reciprocating motion, able to transfer the products (P), one at a time, from the supply line (10) to the support rod (R') supported in the loading station (20),
wherein the transfer device (40) comprises:
a sliding track (45) which develops along a segment of a straight section, parallel to the support rod (R') supported in the loading station (20),
a sole shuttle (41), able to transfer all the products one at a time, with an outward run in which it moves in a direction going from a proximal end (Ra) of the support rod (R') towards a distal end (Rb) up to a point where the product is released, and
a return run in an opposite direction, in which the shuttle (41) moves along the sliding track (45), in a direction going from the distal end (Rb) towards the proximal end (Ra), up to arrival in proximity of the supply line (10),
the shuttle (41) bearing a second support means (42) conformed such as to supportingly receive the hanging string (P1) of a product and keep the eyelet of the string (P1) open such that the string can be inserted about the support rod (R').

2. The apparatus of the preceding claim, **characterised in that** the second support means (42) is associated to the shuttle (41) such that the string (P1) of a product hung therefrom runs about the section of the support rod (R'), and a pusher means (52) is provided, associated to the shuttle (41) able to actuate the displacement of the string (P1) from the second support means (42) to the support rod (R').

3. The apparatus of the preceding claim, **characterised in that** the shuttle (41) is able to rotate the second support means (42) together with the second pusher means (52), about a vertical axis (43), such as to vary an orientation thereof in the horizontal plane.

4. The apparatus of claim 1, **characterised in that** in the loading station the support rod (R') is arranged substantially perpendicular to the advancement direction of the supply line (10).

5. The apparatus of any one of the preceding claims, **characterised in that** it comprises an intermediate device (31, 36), operating at the loading station (20), able to actuate the transfer of the hooking string (P1) from the first support means (11) to the second support means (42).

6. The apparatus of the preceding claim, **characterised in that** the eyelet of the hanging string (P1) kept open by the first support means (11) develops on a vertical plane, parallel to the direction of the supply line (10), and the intermediate device comprises a first pusher means (31), able to displace the hanging string (P1) from the first support means (11) to the second support means (42).

7. The apparatus of any one of the preceding claims, wherein the constraint means of the loading station comprise a gripping means (22) able to constrain an end (Rb) of the support rod (R') with a joint and at least two support arms (23, 24) for the support rod (R') arranged at a distance from one another and from the gripping means (22).

8. A method for hanging products (P), provided with a hanging string (P1) on support rods (R'), which comprises use of an apparatus according to any one of the preceding claims:
comprising:
actuating transfer of the hanging string (P1) from the first support means (11) to the second support means (42);
thereafter, moving the second support means (42) along a sliding track that is parallel to the support rod (R'),
displacing the hanging string (P1) from the second support means to the support rod (R').

9. The method of claim 8, **characterised in that** during the return run along the track (45), firstly the shuttle (41) operates a rotation of the second support means (42) together with the second pusher means (52), about the vertical axis (43), in such a way as to orientate the means (42) substantially parallel to the rod (R') and the free end (42a) facing towards the distal end (Rb) of the rod (R') and the abutting body (55) located further upstream with respect to the string (P1).

## Patentansprüche

1. Vorrichtung zum Aufhängen von mit Hängeschnur ausgestatteten Produkten auf Trägerstangen, Folgendes umfassend:
eine Zufuhrstrecke (10) für die Produkte (P), die mit einem ersten Trägermittel (11) ausgestattet ist, das in der Lage ist, die Produkte (P) zu tragen, die mittels der Hängeschnüre (P1) aufgehängt worden sind, wobei die ersten Trägermittel (11) derart angepasst sind, dass eine Durchzugsöffnung der Hängeschnur (P1) offengehalten wird,
eine Beladestation (20) für die Produkte (P) zum Laden der Produkte auf die Trägerstangen, die Haltemittel (22, 23, 24) aufweist, die in der Lage sind, eine Trägerstange (R') zu einem Zeitpunkt in einer festen Position zu tragen,
eine Überführungsvorrichtung (40), die mit einer Hin-und-Her-Bewegung arbeitet und in der Lage ist, die Produkte (P) einzeln von der Zufuhrstrecke (10) auf die von der Ladestation (20) getragene Trägerstange (R') zu überführen,
wobei die Überführungsvorrichtung (40) Folgendes umfasst:
eine Gleitspur (45), die sich entlang eines Teils eines geraden Abschnitts und parallel zur Trägerstange (R') erstreckt, die in der Beladestation (20) getragen wird,
eine Unterbau-Pendelvorrichtung (41), die in der Lage ist, alle Produkte einzeln zu überführen, mit einem auswärts gerichteten Lauf, bei dem sie sich in eine Richtung bewegt, die von einem nahen Ende (Ra) zu einem fernen Ende (Rb) der Trägerstange (R') bis zu einem Punkt führt, an dem das Produkt abgegeben wird, und einem Rückkehrlauf in entgegengesetzter Richtung, bei dem sich die Pendelvorrichtung (41) entlang der Gleitspur (45) in eine Richtung bewegt, die vom fernen Ende (Rb) hin zum nahen Ende (Ra) bis zur Ankunft in der Nähe der Zufuhrstrecke (10) führt,
wobei die Pendelvorrichtung (41) ein zweites Trägermittel (42) trägt, das dafür angepasst ist, die Hängeschnur (P1) eines Produkts tragend aufzunehmen und die Durchzugsöffnung der Schnur (P1) derart offenzuhalten, dass die Schnur über die Trägerstange (R') gezogen werden kann.

2. Vorrichtung nach dem vorhergehenden Anspruch, **dadurch gekennzeichnet, dass** das zweite Trägermittel (42) derart mit der Pendelvorrichtung (41) verbunden ist, dass die Schnur (P1) eines daran hängenden Produkts, über den Abschnitt der Trägerstange (R') verläuft, und dass ein Drückmittel (52) bereitgestellt ist, das mit der Pendelvorrichtung (41) verbunden und in der Lage ist, die Verlagerung der Schnur (P1) vom zweiten Trägermittel (42) auf die Trägerstange (R') auszulösen.

3. Vorrichtung nach dem vorhergehenden Anspruch, **dadurch gekennzeichnet, dass** die Pendelvorrichtung (41) in der Lage ist, das zweite Trägermittel (42) zusammen mit dem zweiten Drückmittel (52) derart um eine vertikale Achse (43) zu drehen, dass deren Ausrichtung in der horizontalen Ebene verändert wird.

4. Vorrichtung nach Anspruch 1, **dadurch gekennzeichnet, dass** die Trägerstange (R') in der Ladestation im Wesentlichen senkrecht zur Vorrückrichtung der Zufuhrstrecke (10) angeordnet ist.

5. Vorrichtung nach einem der vorhergehenden Ansprüche, **dadurch gekennzeichnet, dass** sie eine Zwischeneinrichtung (31, 36) umfasst, die an der Ladestation (20) arbeitet und in der Lage ist, die Überführung der Hängeschnur (P1) vom ersten Trägermittel (11) auf das zweite Trägermittel (42) auszulösen.

6. Vorrichtung nach dem vorhergehenden Anspruch, **dadurch gekennzeichnet, dass** sich die Durchzugsöffnung der Hängeschnur (P1), die vom ersten Trägermittel (11) offengehalten wird, in einer vertikalen Ebene erstreckt, die parallel zur Richtung der Zufuhrstrecke (10) liegt, und die Zwischeneinrichtung ein erstes Drückmittel (31) umfasst, das in der Lage ist, die Hängeschnur (P1) vom ersten Trägermittel (11) auf das zweite Trägermittel (42) zu verlagern.

7. Vorrichtung nach einem der vorhergehenden Ansprüche, wobei das Haltemittel der Beladestation ein Greifmittel (22), das in der Lage ist, mittels einer Verbindungsstruktur ein Ende (Rb) der Trägerstange (R') zu halten, und mindestens zwei Trägerarme (23, 24) für die Trägerstange (R') umfasst, die in einem Abstand zueinander und zum Greifmittel (22) angeordnet sind.

8. Verfahren zum Aufhängen von mit einer Hängeschnur (P1) ausgestatteten Produkten (P) auf Trägerstangen (R'), das die Verwendung einer Vorrichtung nach einem der vorhergehenden Ansprüche sowie Folgendes umfasst:
Auslösen der Überführung der Hängeschnur (P1) vom ersten Trägermittel (11) auf das zweite Trägermittel (42),
nachfolgend Bewegen des zweiten Trägermittels (42) entlang einer Gleitspur, die parallel zur Trägerstange (R') liegt,
Verlagern der Hängeschnur (P1) vom zweiten Trägermittels auf die Trägerstange (R').

9. Verfahren nach Anspruch 8, **dadurch gekennzeichnet, dass** während des Rücklaufs entlang der Spur (45) als erstes die Pendelvorrichtung (41) eine Drehung des zweiten Trägermittels (42) zusammen mit dem zweiten Drückmittel (52) um die vertikale Achse (43) derart bewirkt, dass das Mittel (42) im Wesentlichen parallel zur Stange (R') ausgerichtet wird und das freie Ende (42a) zum fernen Ende (Rb) der Stange (R') weist und der Anschlagkörper (55) im Verhältnis zur Schnur (P1) weiter prozessaufwärts angeordnet wird.

## Revendications

1. Appareil pour suspendre sur des barres de support des produits pourvus d'un fil de suspension,
comprenant :
une ligne d'alimentation (10) des produits (P) pourvue d'un premier moyen de support (11) capable de supporter les produits (P) suspendus par les fils de suspension (P1), le premier moyen de support (11) étant conformé de manière à maintenir ouvert un oeillet du fil de suspension (P1) ;
une station de chargement (20) des produits (P) sur les barres de support comportant un moyen de contrainte (22, 23, 24) capable de supporter une barre de support (R') à la fois dans une position fixe ;
un dispositif de transfert (40) fonctionnant avec un mouvement alternatif, capable de transférer les produits (P) un à la fois depuis la ligne d'alimentation (10) jusqu'à la barre de support (R') supportée dans la station de chargement (20),
dans lequel le dispositif de transfert (40) comprend :
une piste coulissante (45) qui s'étend le long d'un segment d'une section droite, parallèle à la barre de support (R') supportée dans la station de chargement (20),
une navette unique (41) capable de transférer tous les produits un à la fois, avec une course aller sur laquelle elle se déplace dans une direction allant d'une extrémité proximale (Ra) de la barre de support (R') à une extrémité distale (Rb), jusqu'à un point où le produit est libéré, et
une course retour en direction opposée sur laquelle la navette (41) se déplace le long de la piste coulissante (45) dans une direction allant de l'extrémité distale (Rb) vers l'extrémité proximale (Ra), jusqu'à arriver à proximité de la ligne d'alimentation (10),
la navette (41) portant un deuxième moyen de support (42) conformé de manière à recevoir en le supportant le fil de suspension (P1) d'un produit et à maintenir l'oeillet du fil (P1) ouvert de telle sorte que le fil peut être passé autour de la barre de support (R').

2. Appareil selon la revendication précédente, **caractérisé en ce que** le deuxième moyen de support (42) est associé à la navette (41) de telle sorte que le fil (P1) d'un produit qui y est suspendu passe autour de la section de la barre de support (R'), et **en ce qu'**un moyen de poussoir (52) est pourvu, qui est associé à la navette (41) et capable d'effectuer le déplacement du fil (P1) depuis le deuxième moyen de support (42) jusqu'à la barre de support (R').

3. Appareil selon la revendication précédente, **caractérisé en ce que** la navette (41) est capable de faire tourner le deuxième moyen de support (42) conjointement au deuxième moyen de poussoir (52) autour d'un axe vertical (43), de manière à changer son orientation dans le plan horizontal.

4. Appareil selon la revendication 1, **caractérisé en ce que** dans la station de chargement, la barre de support (R') est agencée de manière essentiellement perpendiculaire à la direction d'avancement de la ligne d'alimentation (10).

5. Appareil selon l'une quelconque des revendications précédentes, **caractérisé en ce qu'**il comprend un dispositif intermédiaire (31, 36) fonctionnant à la station de chargement (20), capable d'effectuer le transfert du fil d'accrochage (P1) depuis le premier moyen de support (11) jusqu'au deuxième moyen de support (42).

6. Appareil selon la revendication précédente, **caractérisé en ce que** l'oeillet du fil de suspension (P1) maintenu ouvert par le premier moyen de support (11) s'étend dans un plan vertical, parallèle à la direction de la ligne d'alimentation (10), et **en ce que** le dispositif intermédiaire comprend un premier moyen de poussoir (31) capable de déplacer le fil de suspension (P1) depuis le premier moyen de support (11) jusqu'au deuxième moyen de support (42).

7. Appareil selon l'une quelconque des revendications précédentes, dans lequel le moyen de contrainte de la station de chargement comprend un moyen de saisie (22) capable de contraindre une extrémité (Rb) de la barre de support (R') avec une articulation et au moins deux bras de support (23, 24) pour la barre de support (R') espacés entre eux et du moyen de saisie (22).

8. Procédé pour suspendre sur des barres de support (R') des produits (P) pourvus d'un fil de suspension (P1) qui comporte l'utilisation d'un appareil selon l'une quelconque des revendications précédentes, comprenant :
la réalisation du transfert du fil de suspension (P1) depuis le premier moyen de support (11) jusqu'au deuxième moyen de support (42) ;
le déplacement ensuite du deuxième moyen de support (42) le long d'une piste coulissante qui est parallèle à la barre de support (R'),
le déplacement du fil de suspension (P1) depuis le deuxième moyen de support jusqu'à la barre de support (R').

9. Procédé selon la revendication 8, **caractérisé en ce que** durant la course retour le long de la piste (45), la navette (41) réalise d'abord une rotation du deuxième moyen de support (42) conjointement au deuxième moyen de poussoir (52) autour de l'axe vertical (43), de manière à orienter le moyen (42) sensiblement parallèlement à la barre (R') et l'extrémité libre (42a) en faisant face à l'extrémité distale (Rb) de la barre (R') et au corps de butée (55) se trouvant plus loin en amont par rapport au fil (P1).
